# EUROPÄISCHE PATENTANMELDUNG

(11) **EP 0 944 270 A1**
(43) Veröffentlichungstag der Anmeldung: **22.09.1999**
(21) Anmeldenummer: 98440053.1
(22) Anmeldetag: 18.03.1998
(51) Int. Cl.: H04Q 3/00, H04Q 3/62

(54) **Telekommunikationsanlage zum Anschluss an externe Telekommunikationsnetze**

(71) Anmelder: ALCATEL, 75088 Paris (FR)
(72) Erfinder: Rousseau, Jean-René, 95000 Neuville sur Oise (FR); Riff, Roland, 67100 Strassbourg (FR); Gruner, Richard, 67600 Selestat (FR)
(74) Vertreter: Knecht, Ulrich Karl, Dipl.-Ing.

(57) **Zusammenfassung**

Wenn für einen Teilnehmer ein Ruf bei seiner Telekommunikationsanlage (kurz TK-Anlage) eingeht, sendet die TK-Anlage eine Kennung, die sogenannte "CLI" (Calling Line Identification), an den rufenden Teilnehmer aus, um den Teilnehmeranschluß des gerufenen Teilnehmers anzugeben. Diese Kennung wird auch dann ausgegeben, wenn der gerufene Teilnehmer nicht erreichbar ist und der Ruf auf seine Sprachbox weiter geleitet wird. Befindet sich der Teilnehmer an einem anderen Teilnehmeranschluß, so wird eine andere Kennung ausgegeben, nämlich die CLI für diesen anderen Anschluß.

Die Erfindung schlägt nun eine TK-Anlage (TK) vor, die Mittel zum Erkennen einer Signalisierung (DISA) enthält, die einer der ihr zugeordneten Teilnehmer (B), der sich temporär innerhalb eines externen Telekommunikationsnetzes (PSTN) aufhält, dort auslöst, um für eine Kommunikation mit einem anderen Teilnehmer (A) sich als ein der TK-Anlage zugeordneter Teilnehmer zu erkennen zu geben, und die Mittel zum Erzeugen und Aussenden einer entsprechenden Kennung (CLI) an den anderen Teilnehmer (A) enthält. Dadurch kann ein Teilnehmer von einem nicht seiner TK-Anlage zugeordneten externen Anschluß aus über seine TK-Anlage ein Gespräch mit einem anderen Teilnehmer führen, ohne das dieser es bemerkt.

## Beschreibung

Mit Hilfe einer Telekommunkationsanlage, auch kurz TK-Anlage genannt, kann eine Gruppe von Teilnehmern an externe Telekommunikationsnetzte angeschlossen werden, etwa mit Hilfe einer ISDN-fähigen TK-Anlage (Integrated Services Digital Network). Wenn für einen der Teilnehmer ein Ruf bei der TK-Anlage eingeht, sendet die TK-Anlage eine Kennung, die sogenannte "CLI" (Calling Line Identification), an den rufenden Teilnehmer aus, um den Teilnehmeranschluß des gerufenen Teilnehmers anzugeben. Diese Kennung wird auch dann ausgegeben, wenn der gerufene Teilnehmer nicht erreichbar ist und der Ruf auf seine Sprachbox geleitet wird. Befindet sich der Teilnehmer an einem anderen Teilnehmeranschluß, so wird eine andere Kennung ausgegeben, nämlich die CLI für diesen anderen Anschluß.

Die Erfindung schlägt nun eine Telekommunikationsanlage vor, die Mittel zum Erkennen einer Signalisierung enthält, die einer der ihr zugeordneten Teilnehmer, der sich temporär innerhalb eines der externen Telekommunikationsnetze aufhält, dort auslöst, um für eine Kommunikation mit einem anderen Teilnehmer sich als ein der Telekommunikationsanlage zugeordneter Teilnehmer zu erkennen zu geben, und die Mittel zum Erzeugen und Aussenden einer entsprechenden Kennung an den anderen Teilnehmer enthält.

Dadurch wird erreicht, daß ein Teilnehmer von einem nicht seiner TK-Anlage zugeordneten externen Anschluß aus über seine TK-Anlage ein Gespräch mit einem anderen Teilnehmer führen kann, wobei dem anderen Teilnehmer die Anschluß-Kennung der TK-Anlage, etwa in Form einer CLI, angezeigt wird. Das bedeutet, daß angzeigt wird, der Teilnehmer der TK-Anlage befände sich tatsächlich an einem direkt an die TK-Anlage angeschlossenen Endgerät (Nebenstelle). Der Teilnehmer der TK-Anlage kann also vermeiden, daß die Kennung des externen Anschlußes übertragen und angezeigt wird, woraus auf den wahren Aufenthaltsort des Teilnehmers geschlossen werden könnte. Und dem anderen Teilnehmer wird suggeriert, das er eine Verbindung zu einem Endgerät der TK-Anlage hat. Dies ist z.B. dann wünschenswert, wenn die TK-Anlage in einer Firma installiert ist und den anrufenden Kunden angezeigt werden soll, daß sie mit der Firma und mit einem ihrer Mitarbeiter, nämlich mit einem Teilnehmer der TK-Anlage, verbunden sind.

Vorteilhaft ist es, wenn die Signalisierung, die der Teilnehmer extern auslöst, eine Zugangskodierung zum gesicherten Zugriff auf die TK-Anlage enthält, beispielsweise eine sogenannte PIN (Personal Identity Number). Dadurch wird eine vom externen Netz aus versuchte Manipulation der TK-Anlage verhindert. Nur berechtigte Teilnehmer der TK-Anlage können auch von extern über ihre TK-Anlage ein Gespräch führen.

Außerdem ist es von Vorteil, wenn die TK-Anlage dem Teilnehmer, der die Signalisierung auslöst, eine virtuelle Nummer zuordnet und diese mit der dem Teilnehmer in der TK-Anlage fest zugeordneten Nummer logisch verknüpft. Dadurch können auch Rufe, die an der TK-Anlage für den Teilnehmer eingehen, zu dem Anschluß im externen Netz weitergeleitet werden. Dabei ist es besonders vorteilhaft, wenn die TK-Anlage beim Aufbau der Kommunikationsverbindung nur dann die Kennung an den rufenden anderen Teilnehmer sendet, wenn die logische Verknüpfung der beiden Nummern besteht.

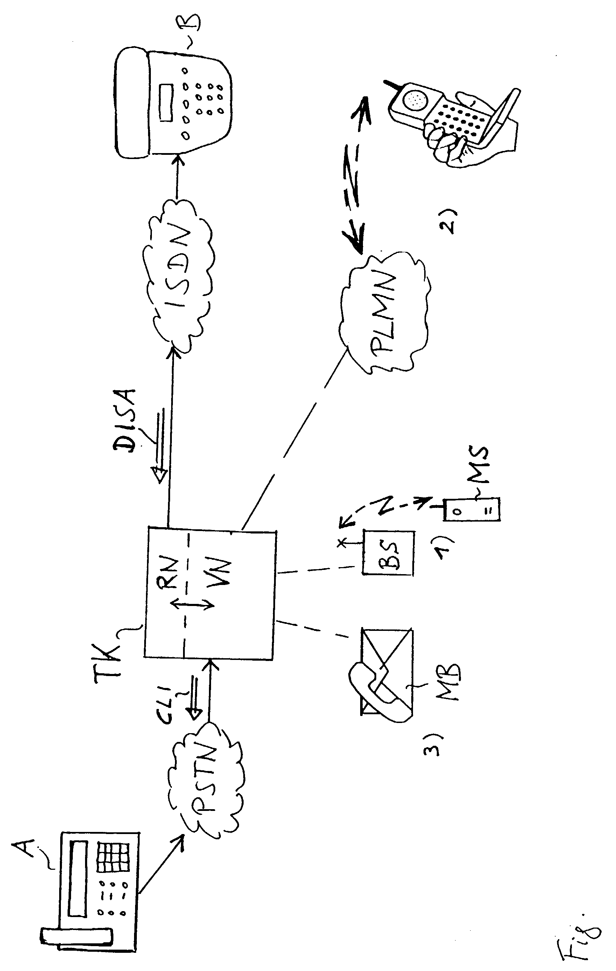

Die Erfindung wird nun im weiteren anhand eines Ausführungsbeispiels beschrieben unter Zuhilfenahme der beiliegenden Zeichnung.

In der Figur ist schematisch eine erfindungsgemäße Telekommunikationanlage TK gezeigt, die mit mehreren externen Telekommunikationsnetzen PSTN, ISDN, und PLNM verbunden ist. An die Telekommunikationsanlage, im weiteren auch kurt TK-Anlage genannt, ist eine Sprachbox MB angeschlossen sowie eine Funkbasisstation BS zur drahtlosen Kommunikation mit Teilnehmerendgeräten, in diesem Beispiel mit DECT-Telefonen (Digital Enhanced Cordless Telephone).

An eines der Telekommunikationsnetze, nämlich an das öffentliche Telekommunikationsnetz PSTN, ist ein drahtgebundenes Endgerät angeschlossen, von dem ein Teilnehmer A einen Ruf zu einem Teilnehmer B absetzt, der der TK-Anlage TK zugeordnet ist. Der Teilnehmer B befindet sich jedoch nicht an einem der an die TK-Anlage TK angeschlossenen Endgeräte, sondern an einem Endgerät, das an eines der externen Telekommunikationsnetze angeschlossen ist, in diesem Beispiel an ein ISDN-Netz.

Ein vom Teilnehmer A eingehender Ruf bei der TK-Anlage würde nun nach herkömmlicher Art wie folgt abgearbeitet: Zunächst würde der Ruf an dasjenige Endgerät MS der TK-Anlage weiter geleitet, das der gerufenen Teilnehmer B normalerweise benützt. Ist der gerufenen Teilnehmer dort nicht erreichbar, so wird geprüft, ob eine Rufweiterleitung zu einem anderen Anschluß veranlaßt wurde, beispielsweise zu einem öffentlichen Mobilfunknetz PLMN oder zu einer Sprachbox MB. Dem rufenden Teilnehmer A würde entsprechend dem Endgeräte-Anschluß, wo sich der gerufene Teilnehmer B aufhält, eine andere Kennung angezeigt werden.

Erfindungsgemäß verfügt nun die TK-Anlage TK über Mittel zum Erkennen einer Signalisierung DISA, die der Teilnehmer B von dem externen Telekommunikationsnetz ISDN aus auslösen kann, und über Mittel zum Erzeugen und Aussenden einer Kennung CLI, die aufgrund der Signalisierung erzeugt wird und die die Nummer des Anschlußes des Teilnehmers B an der TK-Anlage TK angibt. Beispielsweise wird die Signalisierung mittles eines Decoders empfangen und ausgewertet.

Damit wird erreicht, daß dem rufenden Teilnehmer A vorgetäuscht wird, der rufende Teilnehmer B befinde sich an einem Endgerät MS seiner TK-Anlage. Beispielsweise ist der rufende Teilnehmer A ein Kunde, der bei einer Firma anruft, bei der die Telekommunikationanlage TK installiert ist. Der gerufene Teilnehmer B ist ein Mitarbeiter der Firma, der sich momentan außerhalb der Firma aufhält und nur über das externe Telekommunikationsnetz ISDN erreichbar ist. Wird nun ausgehend vom rufenden Teilnehmer A ein Ruf über die TK-Anlage und über das ISDN-Netz zu dem gerufenen Teilnehmer B aufgebaut, so wird dem rufenden Teilnehmer A die Kennung CLI für das Endgerät an der TK-Anlage angezeigt. Das bedeutet der rufende Teilnehmer A, der in diesem Beispiel ein Kunde der Firma ist, glaubt, daß er mit der Firma und dem gewünschten Mitarbeiter (Teilnehmer B) verbunden ist. Damit kann die Firma sicherstellen, daß die extern eingehenden Rufe mit einem einheitlichen Kennung CLI, die aus dem Rufnummernblock der TK-Anlage der Firma stammt, angenommen und bearbeitet werden. Beispielsweise wird die Kennung mittels eines Encoders erzeugt und ausgesendet.

Die TK-Anlage enthält außerdem Mittel, die aufgrund der empfangenen Signalisierung, dem Teilnehmer B eine virtuelle Nummer (VN) zuordnen und diese mit der Nummer (RN) seines TK-Anlagen-Anschluß logisch verknüpfen. Dadurch wird erreicht, daß aufgrund der von extern kommenden Signalisierung DISA eine Rufweiterleitung veranlaßt wird, die sicherstellt, daß die bei der TK-Anlage eingehenden Rufe an den sich im externen Netz ISDN aufhaltenden Teilnehmer B weitergeleitet werden.

Das in der Figur dargestellte Szenario für einen an der TK-Anlage eingehenden Ruf ist nur ein Beispiel für die Erfindung. Die Erfindung ist auch anwendbar auf solche Rufe, die von dem Teilnehmer der TK-Anlage (in Figur also der Teilnehmer B) ausgelöst werden, falls dieser sich nicht im Bereich der TK-Anlage, sondern sich im Bereich eines externen Telekommunikationsnetzes aufhält. Dann kann der Teilnehmer von extern über seine TK-Anlage Rufverbindungen aufbauen. Es ist vorteilhaft, wenn die TK-Anlage auch über Mittel zu Gebührenberechnung verfügt, die Kosten für Dienste und Gespräche auf solchen Rufverbindungen berechnet. Damit können die von dem Teilnehmer von extern über seine Telekommunikationsanlage geführten Rufe so berechnet werden, daß die Telekommunikationsverbindung über das externe Netz separat von der Telekommunikationsverbindung über die TK-Anlage berücksichtigt wird.

Die Erfindung ist besonders gut geeignet zum Einsatz in Telekommunikationsnetzen für mobile Teilnehmer. Die die Teilnehmer können also sowohl selbst mobil können und von einem draht gebundenen Endgerät zu einem anderen wechseln, als auch zusammen mit einem drahtlosen Endgerät mobil sein und sich im Versorgungsbereich des Telekommunikationsnetzes frei bewegen.

## Patentansprüche

1. Telekommunikationsanlage (TK), die mit mindestens einem externen Telekommunikationsnetz (PSTN, ISDN, PLMN) verbunden ist, die Mittel zum Erkennen einer Signalisierung (DISA) enthält, die ein Teilnehmer (B), der sich von seinem Endgerät (MS) der Telekommunikationsanlage (TK) entfernt und sich temporär innerhalb eines (ISDN) der externen Telekommunikationsnetze (PSTN, ISDN, PLMN) aufhält, dort auslöst, um für eine Kommunikation mit einem anderen Teilnehmer (A) sich als ein der Telekommunikationsanlage (TK) zugeordneter Teilnehmer (B) zu erkennen zu geben, und die Mittel zum Erzeugen und Aussenden einer entsprechenden Kennung (CLI) an den anderen Teilnehmer (A) enthält.

2. Telekommunikationsanlage (TK) nach Anspruch 1,
bei der die Signalisierung (DISA) eine Nummer zum externen Zugriff auf die Telekommunikationsanlage (TK) enthält.

3. Telekommunikationsanlage (TK) nach Anspruch 2,
bei der die Signalisierung (DISA) eine Zugangskodierung zum gesicherten Zugriff auf die Telekommunikationsanlage (TK) enthält.

4. Telekommunikationsanlage (TK) nach Anspruch 1,
die außerdem Mittel enthält, die dem Teilnehmer (B), der die Signalisierung (DISA) auslöst, eine virtuelle Nummer (VN) zuordnen und mit der dem Teilnehmer (B) in der Telekomunikationsanlage (TK) fest zugeordneten Nummer (RN) logisch verknüpfen.

5. Telekommunikationsanlage (TK) nach Anspruch 1,
bei der die erzeugte und ausgesendete Kennung eine standardisierte Kennung (CLI) für den dem Teilnehmer (B) zugeordneten Teilnehmeranschluß ist.

6. Telekommunikationsanlage nach Anspruch 1,
die bei einem von dem Teilnehmer zum anderen Teilnehmer ausgehenden Aufbau einer Kommunikationsverbindung die Signalisierung erkennt und die Kennung an den anderen Teilnehmer sendet.

7. Telekommunikationsanlage nach Anspruch 4,
die bei einem zu dem Teilnehmer (B) von dem anderen Teilnehmer (A) ausgehenden Aufbau einer Kommunikationsverbindung dann die Kennung (CLI) an den anderen Teilnehmer (A) sendet, wenn die logische Verknüpfung von der dem Teilnehmer (B) fest zugeordneten Nummer (RN) und der virtuellen Nummer (VN) besteht.
